(19) Europäisches Patentamt
European Patent Office
Office européen des brevets

(11) **EP 2 374 985 A2**

(12) **EUROPÄISCHE PATENTANMELDUNG**

(43) Veröffentlichungstag:
 **12.10.2011 Patentblatt 2011/41**

(51) Int Cl.:
 *E06B 9/82* (2006.01)   *E06B 9/88* (2006.01)

(21) Anmeldenummer: **11159590.6**

(22) Anmeldetag: **24.03.2011**

(84) Benannte Vertragsstaaten:
 **AL AT BE BG CH CY CZ DE DK EE ES FI FR GB GR HR HU IE IS IT LI LT LU LV MC MK MT NL NO PL PT RO RS SE SI SK SM TR**
 Benannte Erstreckungsstaaten:
 **BA ME**

(30) Priorität: **08.04.2010 DE 102010003761**

(71) Anmelder: **Strack Lift Automation GmbH**
 **42489 Wülfrath (DE)**

(72) Erfinder: **Strack, Dirk**
 **42109, Wuppertal (DE)**

(74) Vertreter: **Bauer Vorberg Kayser**
 **Patentanwälte**
 **Goltsteinstrasse 87**
 **50968 Köln (DE)**

(54) **Motorisch angetriebenes Tor mit einer Sicherheitseinrichtung**

(57) Das motorisch angetriebene Tor hat eine Sicherheitseinrichtung (20), eine linke und eine rechte Torführung (26, 28) und ein bewegliches Torblatt (30). Letzteres hat eine Torkante (32) und bewegt sich innerhalb eines Bewegungsbereichs (34). Die Sicherheitseinrichtung (20) erfasst ein fremdes Objekt (46). Die Sicherheitseinrichtung (20) hat ein Lichtgitter mit einer Anzahl von Lichtsendern und einer Anzahl von Lichtempfängern, jeweils einer der Lichtsender Sx und einer der Lichtempfänger Ey bilden jeweils einen Kanal SxEy. Das Lichtgitter hat eine Vielzahl von Kanälen, jeder Kanal befindet sich zumindest teilweise im Bewegungsbereich (34). Die Torkante (32) weist innerhalb des Bewegungsbereichs (34) eine Höhe auf, die größer ist als der Abstand von zwei benachbarten Kanälen. Drei benachbarte Überwachungskanäle werden jeweils gemeinsam überwacht, zwei befinden sich im Bereich der Torkante (32) und eine unterhalb der Torkante (32).

Fig. 1

EP 2 374 985 A2

**Beschreibung**

Die Erfindung bezieht sich auf ein motorisch angetriebenes Tor, das eine Sicherheitseinrichtung, eine linke und eine rechte Torführung und ein bewegliches Torblatt aufweist, das Torblatt hat eine Torkante und bewegt sich innerhalb eines Bewegungsbereichs, die Sicherheitseinrichtung erfasst ein fremdes Objekt, das sich in einem freien Teil des Bewegungsbereichs unterhalb der Torkante befindet und verhindert eine Kollision, die Sicherheitseinrichtung hat ein Lichtgitter, das Lichtgitter hat eine Anzahl von Lichtsendern, die einer Torführung zugeordnet sind und eine Anzahl von Lichtempfängern, die der anderen Torführung zugeordnet sind, jeweils einer der Lichtsender und einer der Lichtempfänger bilden jeweils einen Kanal, das Lichtgitter hat eine Vielzahl von Kanälen, jeder Kanal befindet sich zumindest teilweise im Bewegungsbereich.

Derartige motorisch angetriebene Tore sind aus EP 902 157 B1 und EP 902 158 B1 bekannt. Bei diesen Toren ist das Lichtgitter der Sicherheitsanordnung in den Torführungen angeordnet. Es wird die komplette Toröffnungsbreite überwacht. Die Torführungen dienen zugleich dem mechanischen Halt der einzelnen Lichtempfänger und Lichtsender. Die Lichtempfänger und die Lichtsender sind jeweils in einer Reihe angeordnet. Es werden auch die seitlichen Führungsschlitze in den Torführungen überwacht.

Nachteilig bei den vorbekannten motorisch angetriebenen Toren der oben genannten Art ist es, dass derjenige Kanal des Lichtgitters, der sich bei einer Schließbewegung des Torblattes unmittelbar unterhalb der Torkante befindet, weder im Einzustand noch im Auszustand ist, sondern einen Zwischenzustand einnimmt. In diesem Zwischenzustand, der ein dritter Zustand ist, findet keine Überwachung statt. Unterbricht ein fremdes Objekt diesen Kanal, wird keine Störung erkannt. Dadurch kann es zu folgeschweren Unfällen kommen.

Hiervon ausgehend liegt der Erfindung die Aufgabe zugrunde, ein motorisch angetriebenes Tor der eingangs genannten Art dahingehend weiterzuentwickeln und zu verbessern, dass die Überwachung auf ein fremdes Objekt im freien Teil des Bewegungsbereichs unterhalb der Torkante verbessert wird und insbesondere auch der Kanal, der sich in unmittelbarer Nähe der Torkante, aber (noch) nicht von dieser überdeckt ist, überwacht wird.

Diese Aufgabe wird gelöst durch ein motorisch angetriebenes Tor mit den Merkmalen des Patentanspruchs 1.

Bei diesem motorisch angetriebenen Tor bleiben viele Vorteile der motorisch angetriebenen Tore der eingangs genannten Art erhalten. Das Lichtgitter kann direkt in die Toröffnung, nämlich in die seitlichen Torführungen, eingebaut werden. Es wird die volle Torbreite einschließlich der seitlichen Führungsschlitze überwacht. Es werden keine zwei Lichtgitter vor und hinter dem Tor benötigt. Es werden keine Anforderungen an die Torblattbeschaffenheit oberhalb der Torkante gestellt, d.h. die Lichtstrahlen können oberhalb der Torkante unterbrochen werden oder nicht. Der Bereich unterhalb der Torkante kann mit Parallelstrahlen, was eine schnellere Reaktionszeit ermöglicht, oder mit schrägen Strahlen, insbesondere Kreuzstrahlen, was eine feinere Auflösung ermöglicht, überwacht werden. Das Raster der Kanäle kann innerhalb des Lichtgitters variieren, so können beispielsweise die Kanäle im unteren Bereich und damit in Nähe der Schließposition des Torblatts 40 mm, im oberen Bereich 120 mm Abstand voneinander in Betätigungsrichtung des Torblatts haben. Das Torblatt ist in seiner Funktionalität praktisch nicht eingeschränkt, es darf selbsttätig während des Öffnens und Schließens stehen bleiben und wieder anfahren, auch mit Richtungsumkehr, ohne dass die Sicherheitseinrichtung einen Fehler meldet.

Erfindungsgemäß wird nun der Lichtstrahl direkt unterhalb der Torkante bis zum Schluss mit in die Überwachung des Torweges einbezogen, es entsteht also keine Überwachungslücke an der gefährlichsten Stelle.

Die Erfindung ist nicht auf übliche Tore, durch die z.B. Lkws fahren oder Menschen hindurchlaufen können, beschränkt. Unter Tor kann auch eine sich öffnende oder schließende Scheibe in einem Kraftfahrzeug, beispielsweise in einer Kraftfahrzeugtür; eine Schiebetür oder dergleichen verstanden werden. Die Beschreibung geht stets von einem Hubtor aus, darin soll keine Einschränkung liegen. Auch andere Torarten sind von der vorliegenden Anmeldung umfasst. Unter dem Begriff Torblatt wird jede mögliche Ausbildung eines Schließteils verstanden, insbesondere ein starres Torblatt, ein Sektionaltor, ein Gittertor, ein Glastor usw. Erfindungsgemäß ist die Torkante, in Bewegungsrichtung des Tors gesehen, so hoch ausgebildet, dass sie stets mindestens zwei benachbarte Kanäle, die Parallelstrahlen haben, unterbricht. Die Türkantenerkennung erfolgt immer mit drei benachbarten Überwachungskanälen und parallel verlaufenden Lichtstrahlen. Parallel bedeutet quer, insbesondere rechtwinklig zur Bewegungsrichtung des Torblatts. Vorzugsweise wird ein Multiplexverfahren verwendet, die Überwachungskanäle werden also seriell abgetastet. Eine Parallelabtastung ist möglich. Die sonstigen Kanäle, die sich im freien Teil des Bewegungsbereichs unterhalb der Torkante befinden, werden mit Parallelen oder Schrägen, insbesondere gekreuzten, Lichtstrahlen überwacht. Zu diesen sonstigen Kanälen gehören nicht die drei benachbarten Überwachungskanäle. Wird ein Multiplexverfahren durchgeführt, werden die sonstigen Kanäle im Anschluss an die Erfassung der drei benachbarten Überwachungskanäle erfasst. Ist mindestens ein Kanal der sonstigen Kanäle oder der unterste Kanal der drei benachbarten Überwachungskanäle unterbrochen, gibt die Sicherheitseinrichtung eine Fehlermeldung und wird das Tor dementsprechend gestoppt oder reversiert oder dergleichen. Die Kanäle an oder oberhalb der Torkante, die von der Torkante unterbrochen sind und sich oberhalb der drei benachbarten Überwachungskanäle befinden, werden nicht berücksichtigt, ihr Ergebnis wird nicht ausgewertet.

Wenn das Tor seine Schließstellung erreicht hat, wird der Lichtgitterausgang nach einer gewissen Zeit, z.B.

nach zwei Sekunden, betriebsmäßig unterbrochen. Wenn bei der nächsten Toröffnung die beiden untersten Kanäle wieder frei werden, schaltet der Ausgang wieder ein.

Ist das Tor geschlossen, können aus Energiespargründen alle Lichtsender ausgeschaltet werden und kann ein Testeingang gesetzt werden. Die Lichtempfänger mit ihrer zugeordneten Elektronik bleiben eingeschaltet. Es können allerdings auch die Lichtempfänger mit ihrer zugeordneten Elektronik ausgeschaltet werden, wenn nach Wiedereinschaltung der Ausgang solange unterbrochen ist, bis alle Kanäle frei sind. Erst ab diesem Zeitpunkt arbeitet die Torkantenerkennung wieder.

Bei der ersten Inbetriebnahme des Tors wird eine Lernfahrt mit der Normalgeschwindigkeit durchgeführt, mit der das Tor auch später betrieben wird. Dabei wird an jedem Ort die Geschwindigkeit des Tors erfasst und in einem Speicher abgelegt. Die Torkante darf das Lichtgitter später maximal mit dieser ortsabhängigen Geschwindigkeit plus einer festgelegten Toleranz durchfahren. Eine minimale Öffnungs- und Schließgeschwindigkeit wird vorzugsweise nur oben zwischen den obersten Kanälen K1 und K2 sowie zwischen den untersten Kanälen Kn-1 und Kn gefordert.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnungen näher erläutert wird. In dieser Zeichnung zeigen:

Fig. 1: eine schematische Darstellung einer Frontansicht eines motorisch angetriebenen Tores mit zwei seitlichen Lesiten, einem beweglichen Torblatt und einer Sicherheitseinrichtung,

Fig. 2: eine Draufsicht auf die Darstellung nach Fig. 1, nun mit Torführungen,

Fig. 3: ein Bitmuster für die Schließbewegung des Torblatts von einer vollständigen Öffnungsstellung in die vollständige Schließstellung.

Fig. 4: eine Tabelle der Aktion in Abhängigkeit vom erkannten Bitmuster, und

Fig. 5: ein Flussdiagramm für die Steuerung der Sicherheitseinrichtung.

Das motorisch angetriebene Tor hat eine Sicherheitseinrichtung 20 mit einer Steuerschaltung 21. Sie ist mit einer Motorsteuerung 22 verbunden, die ihrerseits mit einem Antriebsmotor 24 in Verbindung steht. Die Motorsteuerung 22 und der Antriebsmotor 24 sind nach dem Stand der Technik ausgebildet, auf sie muss hier nicht näher eingegangen werden.

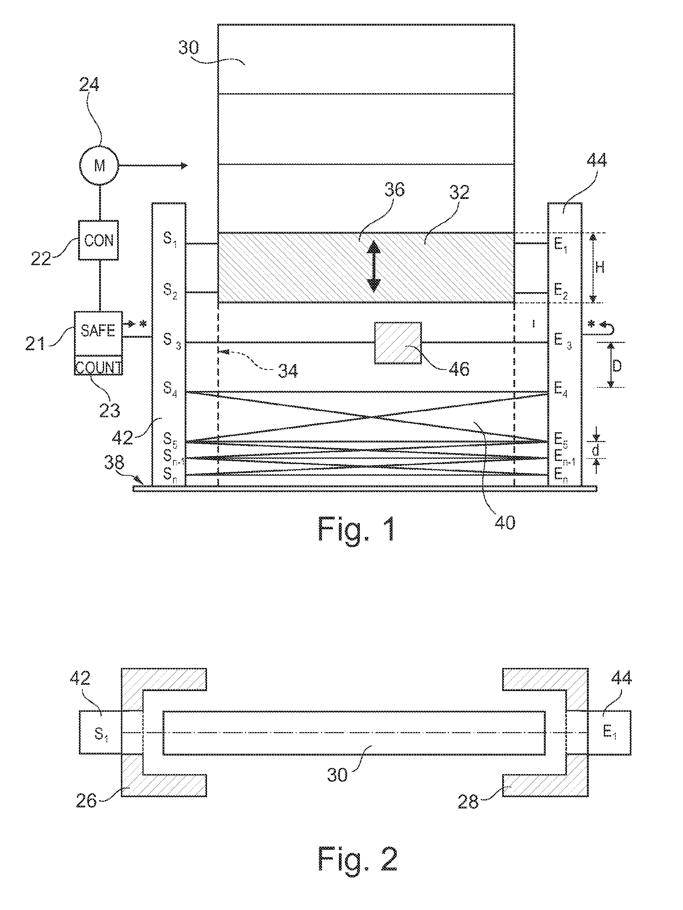

Aus Figur 2 ist eine linke Torführung 26 und eine rechte Torführung 28 ersichtlich, beide sind in Figur 1 nicht dargestellt, um diese Zeichnung besser erkennbar zu machen, insbesondere die Lichtstrahlen zeigen zu können. Die Torführungen 26, 28 führen ein Torblatt 30. Dieses hat eine Torkante 32 mit einer Torunterkante. Das Torblatt 30 bewegt sich innerhalb eines Bewegungsbereichs 34. In Figur 1 ist das Torblatt 30 in einer Zwischenposition gezeigt, auf dem Wege nach unten hat es bereits 1/4 bis 1/3 seines Weges zurückgelegt. Die Bewegungsrichtung 36 ist durch einen Doppelpfeil dargestellt. Im geschlossenen Zustand berührt das Torblatt 30 mit seiner Torunterkante einen Boden 38. Zwischen diesem und der aktuellen Position des Torblatts befindet sich ein freier Teil 40 des Bewegungsbereichs 34. Dieser freie Teil hat den Wert Null, wenn die Torunterkante mit dem Boden 38 in Kontakt ist.

Die beiden Torführungen 26, 28 haben ein U-Profil. Dieses hat eine Basis und zwei seitliche Schenkel. In der Basis ist eine Ausnehmung vorgesehen. Hinter dieser ist bei der linken Torführung 26 eine Leiste 42 für in einer Reihe angeordnete Lichtsender S1, S2 ... Sn angeordnet. Auf der gegenüberliegenden Seite, in der rechten Torführung, ist hinter der Ausnehmung eine Leiste 44 für Lichtempfänger E1, E2... En angeordnet. Die Lichtsender Sx und die Lichtempfänger Ex können in unterschiedlichen Paarungen zusammenarbeiten und bilden in einer bestimmten Paarung Sx mit Ey einen Kanal. Alle Kanäle zusammen bilden ein Lichtgitter.

Die Kanäle werden im Folgenden in zwei unterschiedlichen Weisen bezeichnet: Einerseits werden sie mit Sender und Empfänger bezeichnet, so ist beispielsweise der oberste Kanal der Kanal S1E1, der unterste Kanal der Kanal SnEn. Andererseits werden nur die Kanäle mit parallelen Lichtstrahlen neben der Bezeichnung SxEx auch als Kx bezeichnet. Aus Figur 1 ist ersichtlich, dass die Kanäle K1 bis K5 gleichabständig sind, ihr Abstand beträgt D, D hat im Ausführungsbeispiel den Wert 120 mm. Die Kanäle K5 bis Kn sind ebenfalls gleichabständig, bei ihnen beträgt der Abstand d = 40 mm. Alle Lichtsender und alle Lichtempfänger sind mit der Steuerschaltung 21 verbunden, in Figur 1 sind die Verbindungen eingezeichnet.

Es gibt Kanäle mit parallelen Lichtstrahlen, also parallel zur Torunterkante bzw. zum Boden 38 bzw. rechtwinklig zur Bewegungsrichtung 36. Es gibt auch Kanäle mit schräg verlaufenden Lichtstrahlen, beispielsweise ist der Kanal S4E5 eingezeichnet. Er kreuzt sich mit dem Kanal S5E4.

In Bewegungsrichtung 36 hat die Torkante 32 eine Abmessung, die den Wert H hat. H ist stets größer als D, der Unterschied beträgt mindestens 10%, insbesondere mindestens 20%. Dadurch deckt die Torkante 32 stets mindestens zwei parallele Kanäle Kx-1 und Kx ab, im gezeigten Ausführungsbeispiel sind es die Kanäle K1 und K2. Die Torkante 32 deckt auf jeden Fall zwei parallele Kanäle K ab.

Im freien Teil 40 des Bewegungsbereichs 34 ist ein Objekt 46 schematisch dargestellt. Es unterbricht den Kanal K3. Dieser Kanal befindet sich unmittelbar unterhalb der Toruntkante.

Es ist nicht notwendig, die Leisten 42 und 44 mit der Basis der Torführungen 26, 28 zu verbinden, jedoch vorteilhaft. Alternativ können die Leisten 42, 44 auch an anderer Stelle mit der Torführung 26 bzw. 28 verbunden werden. So kann beispielsweise eine Leiste an einer Seite, beispielsweise am Flansch der Außenseite des Tors angeordnet sein, während die andere Leiste an einem Flansch an der Innenseite des Tors angeordnet ist. In diesem Fall unterbricht die Torkante 32 nicht mehr die Lichtstrahlen auf der gesamten Breite des Torblatts 30, sondern nur noch auf einem Teil dieser Breite. Nach wie vor wird die Forderung erfüllt, dass jeder Lichtstrahl eines bestimmten Kanals sich zumindest teilweise im Bewegungsbereich 34 befindet bzw. von der Torkante 32 unterbrochen werden kann.

Die Funktion der Sicherheitseinrichtung 20 wird nun unter zusätzlicher Berücksichtigung der weiteren Figuren erläutert. Die Sicherheitseinrichtung 20 überwacht drei einzelne parallele Kanäle K, die benachbart sind und mit der Torkante 32 schrittweise mitlaufen. Sie werden benachbarte Überwachungskanäle genannt. Sie haben stets die Zahl drei. Zwei dieser Überwachungskanäle werden in der Regel durch das Torblatt 30 abgedeckt, im Ausführungsbeispiel nach Figur 1 sind es die Kanäle K1 und K2. Der dritte Überwachungskanal K3 befindet sich in Nähe der Toruntkante. Er ist der Kanal K mit parallelem Lichtstrahl, der innerhalb des freien Teils 40 näher der Toruntkante ist als alle anderen parallelen Kanäle. Dies gilt sowohl für das Toröffnen als auch das Torschließen.

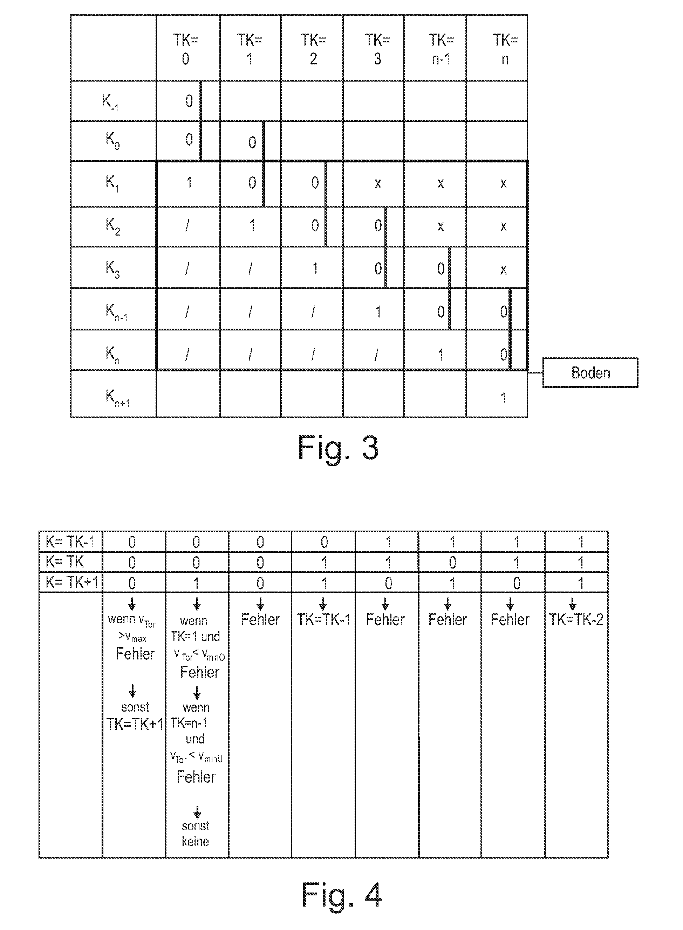

Die drei benachbarten Überwachungskanäle werden jeweils gemeinsam überwacht, dies geschieht seriell oder parallel. Wenn das Tor sich bewegt, beispielsweise wenn das Tor aus der Stellung gemäß Figur 1 sich nach oben bewegt, gibt die Torkante nach kurzer Fahrstrecke den Kanal K2 frei. Sobald dies der Fall ist, wird eine neue Gruppierung gebildet, die drei Überwachungskanäle werden dann gebildet durch einen Kanal K0, der nur virtuell vorhanden ist, und die Kanäle K1 und K2, siehe hierzu insbesondere Figur 3.

Bei der ersten Inbetriebnahme des Tors wird eine Lernfahrt mit maximaler Geschwindigkeit durchgeführt. Die Sicherheitseinrichtung 20 erfasst dabei und speichert die Geschwindigkeit des Torblatts 30 am Ort jedes einzelnen Kanals K. Die Torkante 32 darf das Lichtgitter später maximal mit dieser ortsabhängigen Geschwindigkeit plus einer festgelegten Toleranz $V_{max}$ durchfahren. Eine minimale Öffnungs- und Schließgeschwindigkeit wird nur oben zwischen den Kanälen K1 und K2, dort mit dem Wert $V_{minO}$ sowie zwischen den Kanälen Kn-1 und Kn, dort mit dem Wert $V_{minU}$, gefordert. Das Tor darf nicht selbsttätig auf der Position stehen bleiben, in der es die Kanäle K1 oder Kn-1 unterbricht. Dieses wird mit einer Zeitschaltung überwacht. Die Auszeit bei Unterbrechung des Kanals K-1 entspricht einer $V_{minO}$ von z.B. 0,05 m/s, die Auszeit bei Unterbrechung des Kanals Kn-1 entspricht einer Geschwindigkeit $V_{minU}$ von z.B. 0,01 m/s.

Vorzugsweise erfolgt die Abfrage der einzelnen Lichtempfänger im Multiplexverfahren. Im Anschluss an die Überwachung der drei Überwachungskanäle werden die weiteren Kanäle, die sich im freien Teil 40 befinden, abgefragt und überwacht. Ist mindestens ein Lichtstrahl dieser weiteren Kanäle oder der untere Lichtstrahl der drei benachbarten Überwachungskanäle unterbrochen, gibt die Sicherheitseinrichtung 20 ein Fehlersignal ab und stoppt das Torblatt oder die Tür, reversiert oder macht eine andere Sicherheitsbewegung.

Der oberste parallele Kanal K1 dient hauptsächlich der Torkantenerkennung. Eine Unterbrechung des Lichtstrahls dieses Kanals mit anderen Gegenständen als der Torkante 32 führt nur mit zeitlicher Verzögerung zum Abschalten des Lichtgitterausgangs und Ausgabe eines Fehlersignals. K1 ist daher nicht unmittelbar zur Überwachung vorgesehen, kann aber entsprechend spezifiziert werden.

Wenn das Tor beim Öffnen und Schließen selbsttätig oder durch eine Unterbrechung eines Lichtstrahls eines Kanals stehen bleibt, kann die Motorsteuerung 22 vor einem erneuten Schließen aus dieser Position heraus einen Testausgang setzen.

Wenn eine Unterbrechung während einer Schließbewegung auftritt, merkt sich die Sicherheitseinrichtung 20 die aktuelle Torkantenposition. Hierzu ist in der Sicherheitseinrichtung 20 eine Zählschaltung 23 vorgesehen. Sie zählt die jeweils von der Torkante 32 überfahrenen parallelen Kanäle K. In der Ausführung nach Figur 1 sind dies die Kanäle K1 und K2. Die Torbewegung wird erst wieder freigegeben, wenn alle Lichtstrahlen unterhalb dieser Position frei sind. Wenn dies der Fall ist, wird die neue Torkantenposition bestimmt durch die beiden oberen Überwachungskanäle.

Die Torkantenposition wird mit dem Kürzel TK bezeichnet. Hinzugefügt werden kann als Zusatz nach einem Gleichheitszeichen die Nummer des untersten abgedeckten Kanals K. TK-1 bedeutet die Torposition oberhalb TK. TK+1 bedeutet die Torposition unterhalb TK.

Ist das Tor geschlossen, unterbricht die Sicherheitseinrichtung 20 nach zwei Sekunden betriebsmäßig. Wenn bei der nächsten Toröffnung die untersten beiden Kanäle K wieder frei werden, schaltet der Ausgang wieder ein. Ist das Tor geschlossen, können die Lichtsender aus Energiespargründen ausgeschaltet und kann der Testeingang gesetzt werden. Der Empfänger sollte eingeschaltet bleiben. Wird der Empfänger jedoch ausgeschaltet, bleibt nach Wiedereinschalten der Ausgang der Sicherheitseinrichtung 20 solange unterbrochen, bis alle Kanäle K frei sind. Erst ab diesem Zeitpunkt arbeitet die Torerkennung wieder.

Anhand von Figur 3 ist ein Schließvorgang des Torblatts 30 ersichtlich. In der linken Spalte befindet sich die Torkante TK in der Ausgangsposition ganz oben, also im Zustand 0, deshalb die Angabe TK = 0. Neben dem bereits erwähnten virtuellen Kanal K0 gibt es noch einen virtuellen Kanal K-1. Weiterhin gibt es einen Kanal Kn+1. Er ist ebenfalls virtuell und unterhalb des Bodens 38. Wird das Torblatt 30 ausgehend von der Position TK = 0 nach unten bewegt, kommt es in einen Bereich TK = 1, wo es den Kanal K1 unterbricht, dies ist in der zweiten Spalte dargestellt. Die drei benachbarten Überwachungskanäle ändern in dem Moment, indem der Kanal K1 unterbrochen wird, ihre Zusammensetzung, sie bestehen nun aus K0, K1 und K2. Senkt sich das Torblatt 30 weiter ab, gelangt es in der Position TK = 2 (dritte Spalte) in den Bereich des Kanals K2 und unterbricht diesen. Nun setzen sich die drei benachbarten Überwachungskanäle aus K1, K2 und K3 zusammen. Dieser Vorgang wiederholt sich in jedem nachfolgenden parallelen Kanal Kx bis bei TK = n die Torunterkante den Boden 38 erreicht hat, siehe sechste und letzte Spalte.

In Figur 3 haben die eingezeichneten Symbole folgende Bedeutung: Der schwarze vertikale Strich stellt die Torkante 32 dar. TK ist die variable Torkantenposition. Mit X ist ein Bereich ohne Auswertung bezeichnet, diese Signale wertet die Sicherheitseinrichtung 20 nicht aus. Mit / ist ein Bereich für die normale Auswertung bezeichnet. Bei der jeweiligen Torkantenposition sind es die mit / gekennzeichneten Kanäle, die dem freien Teil 40 zugeordnet sind. Mit 0 ist ein unterbrochener Kanal bezeichnet, mit 1 ist ein freier Kanal bezeichnet.

Anhand von Figur 4 wird die Aktion, die die Sicherheitseinrichtung 20 in Abhängigkeit vom erkannten Bitmuster der benachbarten Überwachungskanäle durchführt, erläutert. In den ersten drei Zeilen sind die unterschiedlichen Zustände, die die drei benachbarten Überwachungskanäle K einnehmen, die den Torpositionen TK-1, TK und TK+1 entsprechen.

In der zweiten Spalte ist das normale Bitmuster 001 gezeigt. Dies entspricht auch der Darstellung in Figur 1. Nur wenn in Fig. 1 die oberste Lichtschranke K1 schneller unterbrochen wird, als das Torblatt 30 sie aufgrund seiner Bewegung abdecken kann, oder wenn der Kanal Kn-1 schneller erreicht wird, als die Torkante 32 ihn abdecken kann, wird ein Fehler ausgegeben.

Die erste Spalte zeigt das Bitmuster 000. Dies entspricht dem Zustand des Übergangs von einer Gruppierung der drei benachbarten Überwachungskanäle in eine nachfolgende Gruppierung, also in Figur 3 dem Übergang von einer Spalte in die rechts danebenliegende Spalte. Nur wenn der untere der benachbarten Überwachungskanäle schneller unterbrochen wird, als dies der Torgeschwindigkeit entspricht, wird ein Fehler ausgegeben. Ansonsten erfolgt eine Weiterschaltung in die nächste Gruppierung. Die Spalten 3 und 5 bis 7 in Fig. 4 zeigen Fehlerzustände. Die Spalte 4 zeigt einen Übergang beim Öffnen des Tores, die Gruppierung der drei benachbarten Überwachungskanäle rutscht nun in der Darstellung gemäß Figur 3 eine Spalte nach links. In der achten Spalte der Figur 4 ist ein Zustand gezeigt, in der die Torunterkante sich nach oben bewegt, hier wird die Gruppierung der drei benachbarten Überwachungskanäle im Zweiersprung geändert, dies entspricht einem Sprung in Figur 3 von einer Spalte nach links in die übernächste Spalte.

Die Abkürzungen in der Figur 4 haben folgende Bedeutung:

Fehler = Lichtgitter unterbricht den Ausgang und wartet auf Reset (Spannung aus-/einschalten)

$v_{Tor}$ = aktuelle Torgeschwindigkeit

$v_{max}$ = max. zulässige Torgeschwindigkeit an diesem Punkt

$v_{min0}$ = minimal zulässige Torgeschwindigkeit oben (an der Pos. K1)

$v_{minU}$ = minimal zulässige Torgeschwindigkeit unten (an der Pos. n-1)

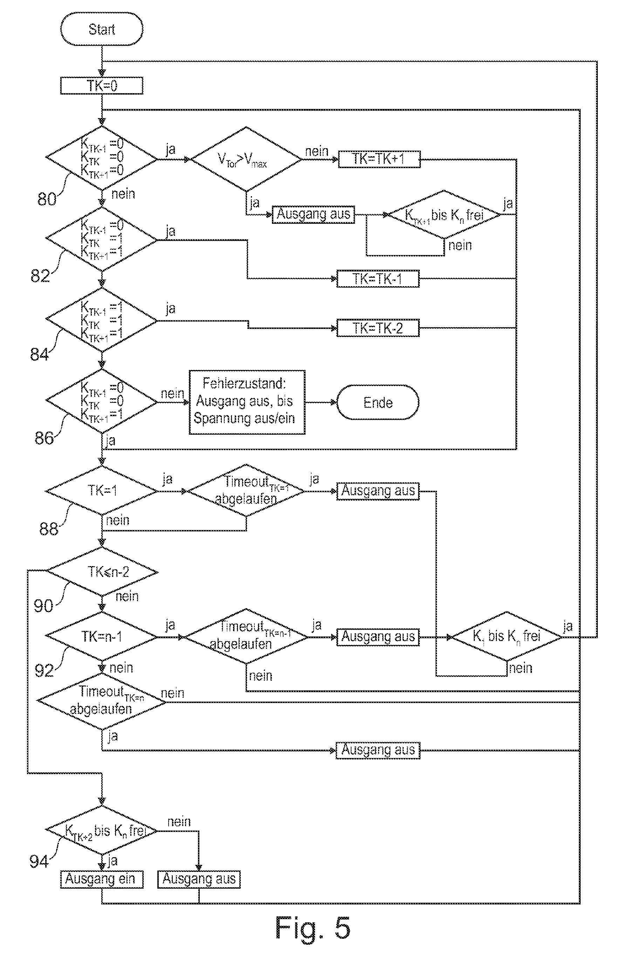

In Figur 5 sind die beschriebenen Zustände noch einmal in einem Flussdiagramm dargestellt. Die Bitmustererkennung erfolgt nacheinander in den Zuständen 80 bis 86, wobei in 86 das gewünschte Bitmuster 001 abgefragt wird. Ist dieses vorhanden, wird in den Zuständen 88, 90 und 92 nacheinander abgefragt, ob sich die Torkante TK in bestehenden Positionen befindet. Im Zustand 94 wird abgefragt, ob die Kanäle im freien Teil 40, hierzu gehören auch Kanäle mit schrägen Lichtstrahlen, frei sind. Ist dies der Fall, wird das Signal "Ausgang ein" ausgegeben, die Torbewegung wird weitergeführt. Bei dem Signal "Ausgang aus" wird die Torbewegung gestoppt. In bekannter Weise wird das Flussdiagramm periodisch durchlaufen. Der Start ist bei TK = 0, also vollständig geöffnetem Tor.

**Patentansprüche**

1. Motorisch angetriebenes Tor, das eine Sicherheitseinrichtung (20), eine linke und eine rechte Torführung (26, 28) und ein bewegliches Torblatt (30) aufweist, das Torblatt (30) hat eine Torkante (32) und bewegt sich innerhalb eines Bewegungsbereichs (34), die Sicherheitseinrichtung (20) erfasst ein fremdes Objekt (46), das sich in einem freien Teil (40) des Bewegungsbereichs (34) unterhalb der Torkante (32) befindet und verhindert eine Kollision, die Sicherheitseinrichtung (20) hat ein Lichtgitter, das Lichtgitter hat eine Anzahl von Lichtsendern, die einer Torführung (z.B. 26) zugeordnet sind und eine Anzahl von Lichtempfängern, die der anderen Torführung (z.B. 28) zugeordnet sind, jeweils einer der Lichtsender Sx und einer der Lichtempfänger Ey bilden jeweils einen Kanal SxEy, das Lichtgitter hat eine Vielzahl von Kanälen, jeder Kanal befindet sich zumindest teilweise im Bewegungsbereich, **dadurch gekennzeichnet, dass** die Torkante (32) innerhalb des Bewegungsbereichs (34) eine Höhe aufweist, die größer ist als der Abstand von zwei benachbarten Kanälen, dass die einzelnen Kanäle entweder den Wert Null, also unterbrochen oder den Wert 1, also frei, haben, und dass drei benachbarte Überwachungskanäle jeweils gemeinsam überwacht werden, von denen sich zwei im Bereich der Torkante (32) und einer unterhalb der Torkante (32) befinden.

2. Motorisch angetriebenes Tor nach Anspruch 1, **dadurch gekennzeichnet, dass** der Antriebsmotor (24) das Tor mit einer ortsabhängigen Geschwindigkeit antreibt, dass die Sicherheitseinrichtung (20) einen Erwartungswert für die Unterbrechung oder Freigabe des in Bewegungsrichtung (36) der Torkante (32) nächstliegenden Kanals auf der Basis der Geschwindigkeit errechnet, und dass die Sicherheitseinrichtung (20) nur dann keine Fehlermeldung gibt, wenn der Kanal innerhalb des Erwartungswertes plus und/oder minus eines Toleranzwertes erreicht wird.

3. Motorisch angetriebenes Tor nach einem der vorangegangenen Ansprüche, **dadurch gekennzeichnet, dass** die drei benachbarten Überwachungskanäle jeweils Kanäle K mit Parallelstrahlen sind.

4. Motorisch angetriebenes Tor nach einem der vorangegangenen Ansprüche, **dadurch gekennzeichnet, dass** bei einer Schließbewegung des Tors nach unten die drei benachbarten Überwachungskanäle im Normalfall das Bitmuster 001 liefert, und dass dann, wenn der untere der drei benachbarten Überwachungskanäle den Wert Null liefert, eine neue Gruppierung der drei benachbarten Überwachungskanäle erfolgt, bei der nun der zuvor obere Kanal entfallen ist und ein Kanal unterhalb des bislang unteren Kanals hinzugekommen ist.

5. Motorisch angetriebenes Tor nach einem der vorangegangenen Ansprüche, **dadurch gekennzeichnet, dass** der freie Teil (40) des Bewegungsbereichs (34) unterhalb der Torkante (32) auch mit schräg verlaufenden Kanälen SxEy, insbesondere mit Kreuzstrahlen, überwacht ist.

6. Motorisch angetriebenes Tor nach einem der vorangegangenen Ansprüche, **dadurch gekennzeichnet, dass** die Sicherheitseinrichtung (20) eine Zählschaltung aufweist, die erfasst, wieviele Kanäle die Torkante (32) bei der Schließbewegung bereits abgedeckt hat bzw. bei der Öffnungsbewegung noch nicht freigegeben hat.

7. Motorisch angetriebenes Tor nach einem der vorangegangenen Ansprüche, **dadurch gekennzeichnet, dass** der in vollständiger Öffnungsstellung des Torblattes (30) der der Torkante (32) nächstliegende Kanal K1, der einen Parallelstrahl aufweist, nicht Bestandteil der Überwachungshöhe des Lichtgitters ist und vorzugsweise nur zur Torkantenerkennung verwendet wird.

Fig. 1

Fig. 2

| | TK= 0 | TK= 1 | TK= 2 | TK= 3 | TK= n-1 | TK= n |
|---|---|---|---|---|---|---|
| $K_{-1}$ | 0 | | | | | |
| $K_0$ | 0 | 0 | | | | |
| $K_1$ | 1 | 0 | 0 | x | x | x |
| $K_2$ | / | 1 | 0 | 0 | x | x |
| $K_3$ | / | / | 1 | 0 | 0 | x |
| $K_{n-1}$ | / | / | / | 1 | 0 | 0 |
| $K_n$ | / | / | / | / | 1 | 0 |
| $K_{n+1}$ | | | | | | 1 |

Boden

## Fig. 3

| $K=TK-1$ | 0 | 0 | 0 | 0 | 1 | 1 | 1 | 1 |
|---|---|---|---|---|---|---|---|---|
| $K=TK$ | 0 | 0 | 0 | 1 | 1 | 0 | 1 | 1 |
| $K=TK+1$ | 0 | 1 | 0 | 1 | 0 | 1 | 0 | 1 |
| | wenn $v_{Tor}$ >$v_{max}$ Fehler ↓ sonst TK=TK+1 | wenn TK=1 und $v_{Tor} < v_{minO}$ Fehler ↓ wenn TK=n-1 und $v_{Tor} < v_{minU}$ Fehler ↓ sonst keine | Fehler | TK=TK-1 | Fehler | Fehler | Fehler | TK=TK-2 |

## Fig. 4

Start

TK=0

$K_{TK-1}=0$
$K_{TK}=0$ — ja → $V_{Tor}>V_{max}$ — nein → TK=TK+1
$K_{TK+1}=0$

80          nein          ja

Ausgang aus → $K_{TK+1}$ bis $K_n$ frei — ja

nein

$K_{TK-1}=0$
$K_{TK}=1$ — ja
$K_{TK+1}=1$

82                        TK=TK-1

nein

$K_{TK-1}=1$
$K_{TK}=1$ — ja
$K_{TK+1}=1$                    TK=TK-2

84

nein

$K_{TK-1}=0$
$K_{TK}=0$ — nein → Fehlerzustand: → Ende
$K_{TK+1}=1$          Ausgang aus, bis
                     Spannung aus/ein
86          ja

TK=1 — ja → Timeout$_{TK=1}$ — ja → Ausgang aus
                abgelaufen

88          nein

TK≤n-2

90          nein

TK=n-1 — ja → Timeout$_{TK=n-1}$ — ja → Ausgang aus → $K_1$ bis $K_n$ frei — ja
                abgelaufen

92          nein                nein                        nein

Timeout$_{TK=n}$ — nein
abgelaufen

ja

Ausgang aus

$K_{TK+2}$ bis $K_n$ frei — nein

94          ja

Ausgang ein          Ausgang aus

Fig. 5

9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 902157 B1
- EP 902158 B1